# EUROPEAN PATENT SPECIFICATION

(11) **EP 3 608 159 B1**
(45) Date of publication and mention of the grant of the patent: **02.06.2021**
(21) Application number: 18306086.2
(22) Date of filing: 07.08.2018
(51) Int. Cl.: B60M 1/20, B60M 1/234

(54) **A DEVICE FOR HOLDING A CONTACT WIRE INTENDED TO BE IN CONTACT WITH RAILWAY VEHICLES**
VORRICHTUNG ZUM HALTEN EINES KONTAKTDRAHTES FÜR DEN KONTAKT MIT SCHIENENFAHRZEUGEN
DISPOSITIF POUR MAINTENIR UN FIL DE CONTACT DESTINÉ À ÊTRE EN CONTACT AVEC DES VÉHICULES FERROVIAIRES

(43) Date of publication of application: 12.02.2020
(73) Proprietor: ALSTOM Transport Technologies, 93400 Saint-Ouen (FR)
(72) Inventor: FORMENTI, Leonardo, 23891 BARZANO (LC) (IT); FLENA, Daniele, 23843 DOLZAGO (LC) (IT)
(74) Representative: Lavoix

(56) References cited:
- CN-Y- 2 535 295
- FR-A- 947 039
- JP-B2- 3 757 012

## Description

This disclosure relates to a device for holding a contact wire intended to be in contact with railway vehicles, said device comprising:
- a support;
- a base rotatably mounted on the support around a first rotation axis intended to be approximately vertical;
- a steady arm having a first end rotatably mounted on the base around a second rotation axis, and a second end opposite said first end, the second rotation axis being approximately perpendicular to the first rotation axis, the steady arm being moveable between a default position with respect to said base, occupied when the railway vehicle is in a remote position with respect to the steady arm, and a plurality of deviated positions, in which the steady arm deviates from the default position as the railway vehicle is in closer positions with respect to the steady arm;
- a clamp connected to the second end of the steady arm, the clamp being intended to be connected to the contact wire; and
- an elastic element set between the base and the steady arm, said elastic element being configured to be deformed when the steady arm is in the default position and in some of the deviated positions.

FR 947 039 A discloses such a device.

A device for such purpose often comprises a steady arm. The aim of the steady arm is to keep the contact wire in its correct position by both maintaining the contact wire at a suitable height and guaranteeing the staggering of the contact wire. The contact wire is maintained in tension in order to keep the geometry of the spans.

The steady arm is a localised mass distributed along the overhead contact wire which increases the local wear of the contact wire.

CN 2535295 discloses a device for this purpose. It comprises a base, and an arm connected at its first end to said base. A spring is installed around said first end, and at the second end of the arm a connecting device holds a contact wire.

This device, however, could not fully resolve all the technical problems that potentially arise from the operation of the contact wire. In particular, the movement of the steady arm may be abrupt and cause significant punctual fluctuations of stress in the contact wire, which is undesirable. This increases maintenance costs and reduces the reliability of the system.

In addition, when the wave resulting from the movement of a pantograph of the railway vehicle along the contact wire comes into contact with the steady arm, two waves are generated on the contact wire: one ahead of the pantograph with a propagation speed higher than the pantograph itself and the other one behind pantograph being then slowly dampened. These waves induce undesirable fluctuations of stress in the contact wire; more detrimentally, these waves can create sparks that increase significantly the wear of the pantograph and the contact wire, or even cause detachment of the contact wire from pantograph, leading to power loss of trains.

An objective of this invention is to reduce maintenance costs and to increase the reliability of the system.

For this purposes, the invention proposes a device as disclosed above for holding a contact wire, further comprising a dampening element configured to dampen movements of the steady arm and as defined in claim 1.

In other embodiments, the device possesses one or several of the following characteristics, taken in isolation or in any technically feasible combination:
- the elastic element is located closer to the first end than to the second end of said steady arm;
- the elastic element is a spring;
- the spring is coiled around the second rotation axis;
- the spring has a first end exerting a force on a lower surface of the steady arm, and a second end exerting a force on a lower surface of the base;
- the base comprises at least a central portion and two lateral portions along the second rotation axis, the second rotation axis extending through the lateral portions;
- the dampening element is located closer to the first end than to the second end of said steady arm;
- the dampening element is fixed to the steady arm; and
- the steady arm has a bent shape, comprising at least a first portion in contact with the first end of the steady arm and a second portion in contact with the second end of the steady arm, the second portion being at an angle with the first portion.

The invention also relates to a power supply installation comprising:
- a support system fixed to a ground;
- a device as disclosed above, the device being mechanically connected to the support system; and
- a contact wire mechanically connected to the clamp.

The invention also relates to a method for holding a contact wire intended to be in contact with at least one railway vehicle, said method comprising the following steps:
- providing a device as disclosed above, the first rotation axis being approximately vertical;
- connecting the clamp to the contact wire; and
- deforming the elastic element when the steady arm is in the default position and in some of the deviated positions;
the method further comprising a step of dampening movements of the steady arm using the dampening element.

The invention will be better understood, upon reading of the following description, given solely as an example, and made in reference to the appended drawings, in which:
- figure 1 is a schematic of a power supply installation for railway vehicles according to the invention;
- figure 2 is a perspective schematic of a device shown in figure 1 for holding a contact wire; and
- figure 3 is a lateral close-up view of a portion of the device shown in figures 1 and 2.

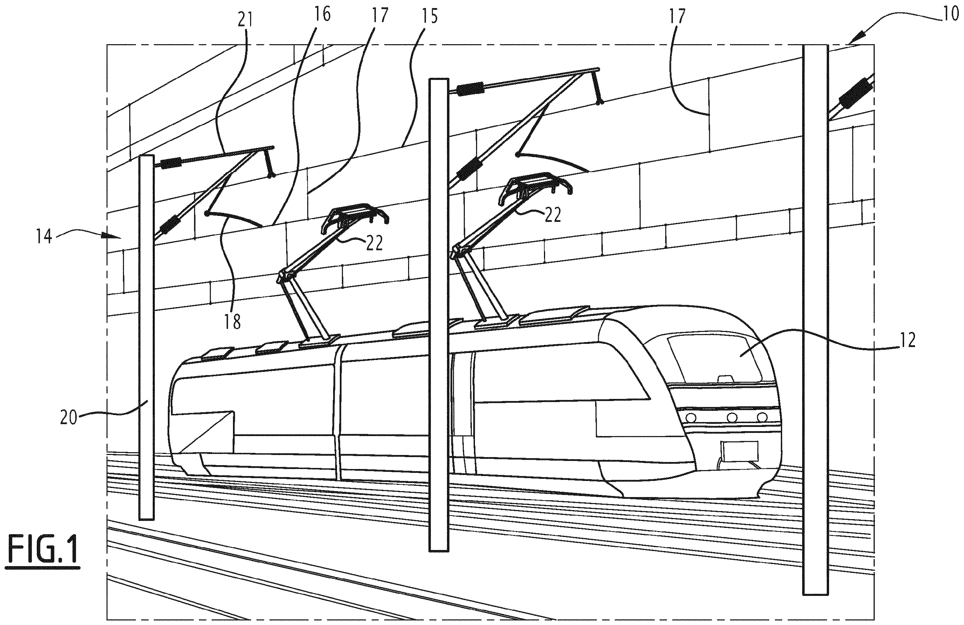

As shown in figure 1, the power supply installation 10 is adapted for supplying power to a railway vehicle 12 as well as other railway vehicles. The railway vehicle 12 is used for transporting passengers. Alternatively, it is used for transporting cargo.

The power supply installation 10 comprises a support system 14, a messenger wire 15, a contact wire 16, droppers 17, and a device 18 for holding the contact wire.

The support system 14 is fixed to the ground, and includes a pole 20 essentially vertical for maintaining the messenger wire 15, the contact wire 16, and the device 18 at a designed height. The support system 14 also comprises an additional structure 21 extending essentially horizontally for keeping the contact wire 16 and the device 18 at a distance from the pole 20.

The contact wire 16 is intended to provide electricity to the railway vehicle 12. The contact wire 16 is in mechanical contact with one or several pantographs 22 of the railway vehicle 12.

The pantographs 22 extend upwards from the roof of the railway vehicle 12.

The messenger wire 15 is attached to the contact wire 16 at regular intervals by vertical wires known as droppers, or drop wires. The messenger wire is held in place by the support system 20. Alternatively, it is held in place by the additional structure 21.

The droppers 17 aims at providing additional structural strength to the messenger wire 15 and the contact wire 16.

A dropper for a railroad line provided with a clamp of the present invention comprises for example a first clamp for the messenger wire, a second clamp for the contact wire, and a dropper connection wire that links the two clamps. The dropper has to guarantee the electrical conductivity between the messenger wire and the contact wire and it is necessary to maintain the contact wire as horizontal as possible.

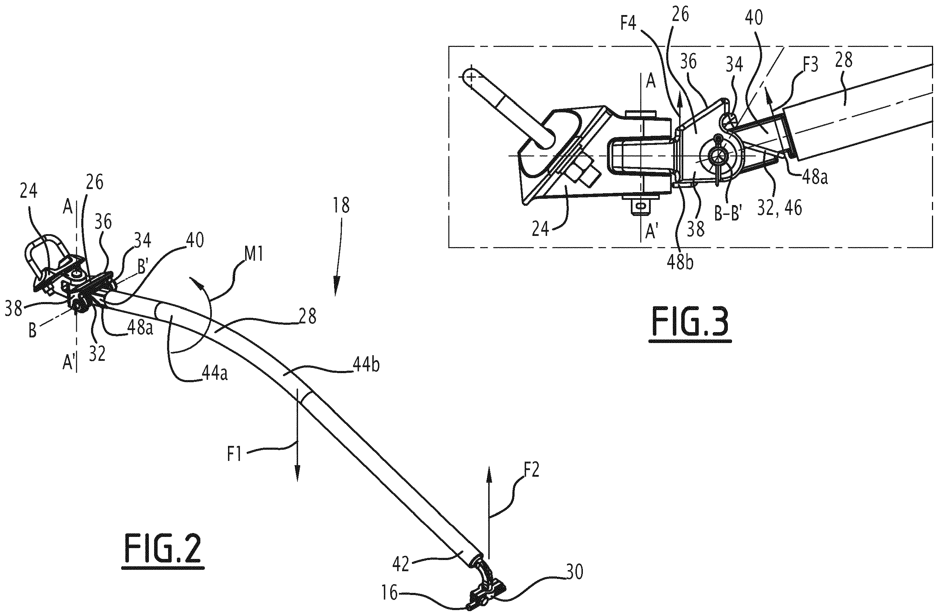

The device 18 will now be described with reference to figures 2 and 3,

The device 18 is adapted to hold the contact wire 16. The device 18 is mechanically connected to the support system 14.

The device 18 comprises a support 24, a base 26 rotatably mounted on the support 24 around a first rotation axis A'A intended to be approximately vertical, a steady arm 28 having a first end rotatably mounted on the base 26 around a second rotation axis B'B, and a second end opposite said first end, the second rotation axis B'B being approximately perpendicular to the first rotation axis A'A, a clamp 30 connected to the second end of the steady arm 28, the clamp 30 being intended to be mechanically connected to the contact wire 16, an elastic element 32, and a dampening element 34.

The support 24 stems from the horizontal structure of the support system 14. The support 24 extends essentially downwards.

The base 26 comprises a central portion 36 and two lateral portions 38 along the second axis B'B. The central portion 36 is approximately horizontal.

The steady arm 28 possesses a bent shape. The steady arm 28 comprises at least a first portion 44a in contact with the first end 40 of the steady arm 28, and a second portion 44b in contact with the second end 42 of the steady arm 28. The second portion 44b is at an angle with the first portion 44a.

In a preferred embodiment of the steady arm 28, the second portion 44b bends downwards with respect to the first portion 44a when in deployed configuration. Alternative configurations could also be adopted.

The steady arm 28 is moveable between a default position with respect to the base 26, and a plurality of deviated positions different from the default position.

As the railway vehicle 12 approaches the steady arm 28 coming into closer positions with respect to the steady arm, the force F2 that the railway vehicle exerts on the steady arm leads the latter to deviate from the default position and come into a plurality of deviated positions. The steady arm rotates around the second rotation axis B'B, both clockwise and anticlockwise, or in both directions.

The clamp 30 is used to maintain the contact wire 16 at a suitable height. The clamp 30 is typically adapted to the shape of the contact wire 16. Such kind of clamps is well documented.

The elastic element 32 is set between the base 26 and the steady arm 28. The elastic element 32 is deformed when the steady arm 28 is in the default position and in some of the deviated positions.

The elastic element 32 is located closer to the first end 40 of the steady arm 28 than to the second end 42 of the steady arm 28.

In a preferred embodiment, the elastic element 32 is a spring 46. The spring 46 is connected to the second rotation axis B'B. The spring 46 is for example coiled around the second rotation axis B'B.

The spring 46 possesses a first end 48a exerting a force F3 on a lower surface of the steady arm 28, and a second end 48b exerting a force F4 on a lower surface of a lateral portion 38 of the base 26.

The dampening element 34 is located closer to the first end 40 of the steady arm 28 than to the second end 42 of the steady arm 28.

In an embodiment, the dampening element 34 is fixed to the steady arm 28. Alternatively, the dampening element is fixed to the base 26.

The dampening element 34 possesses a rectangular or cylindrical shape or other geometric shapes. Alternatively, the dampening element 34 may have any shape adapted for its purpose.

The dampening element 34 is made of rubber, or of other types of material.

The dampening element 34 is a shock absorber. The shock absorber is comprised of a cylinder made of steel or other material, a piston made of steel or other material, and a stem made of steel or other material mounted between the cylinder and the piston.

The dampening element 34 is configured to be compressed between the steady arm 28 and the base 26 in some of the deviated positions of the steady arm 28.

The functioning of the power supply installation 10 will now be described, illustrating a method according to the invention.

Firstly, the installation 10 for holding the contact wire 16 is provided. The installation 10 is installed in such manner that the first rotation axis A'A is approximately vertical.

Secondly, the clamp 30 is connected to the contact wire 16.

When the railway vehicle 12 is in a remote position with respect to the steady arm 28, the influence of the railway vehicle 12 on the steady arm 28 can be neglected. In this case, the steady arm 28 occupies the default position.

When the steady arm 28 occupies its default position, the moment of the weight of the steady arm 28 and the moment of the force F2 that the contact wire 16 exerts on the steady arm via the clamp 30 around the second rotation axis B'B are compensated by the moment generated by the elastic element 32.

Alternatively, when the steady arm 28 occupies its default position, the moment of the weight of the steady arm 28 around the second rotation axis B'B is compensated by two moments: a moment of the force F2 that the contact wire 16 exerts on the steady arm via the clamp 30, and a moment M1 generated by the elastic element 32.

In the default position, the elastic element 32 is deformed so as to provide the balancing moment M1 on the steady arm 28. In the embodiment illustrated by figure 2, the spring 46 is compressed in the default position.

These three moments are in balance, which maintains the steady arm 28 in a static state in the default position.

The dampening element 34 does not perform the dampening effect as the steady arm 28 is in a static state in the default situation.

During the operation of railway lines, the railway vehicle 12 approaches the steady arm 28. When the pantograph 22 of the railway vehicle 12 moves along overhead line, it lifts the contact wire 16, creating a primary wave on the contact wire 16 with a travelling velocity higher than the pantograph 22 with respect to the ground.

When said primary wave comes into contact with the steady arm 28, it generates on the contact wire 16 a backwards-travelling secondary wave behind the pantograph 22 with a travelling speed lower than the pantograph 22.

The primary wave and secondary waves exert a force F2 on the steady arm 28 via the clamp 30.

This force F2 leads the second end 42 of the steady arm 28 to oscillate about the default position.

Other disturbances, such as force exerted by wind on the contact wire can equally cause interruption of balance of moments on the steady arm 28.

In any way, the balance of moments on the steady arm 28 is broken and consequently, the steady arm 28 starts to rotate around the second rotation axis B'B.

In this way, the steady arm 28 rotates into a plurality of deviated positions with respect to the base 26.

The rotation causes the elastic element 32 to deform into a shape different from that when it is under balance and in default position. The elastic element 32 then generates new moments different from that when the steady arm 28 is under balance and in the default position.

The new moments generated by the elastic element 32 under these deviated configurations reach balance with new moments of the force due to the primary wave and the secondary waves that the railway vehicle 12 creates on the steady arm 28 and the moment of the weight of the steady arm 28.

The speed at which the railway vehicle 12 runs may be high and the movement of the steady arm 28 may be abrupt, potentially leading to fluctuations in the stress in the contact wire 16 to change rapidly, which is undesirable.

Two secondary waves increase the fluctuation of stress in the contact wire 16. In addition, they may create sparks during their propagation on the contact wire 16, potentially inducing significant increase of wear in the contact wire 16 and in the pantograph 22.

It could be more damaging if these secondary waves lead to a displacement of the contact wire 16 large enough to cause the pantograph 22 to detach from the contact wire. This could cause a power loss of railway vehicles 12.

The dampening element 34 is compressed in some of the deviated positions. In doing so, the dampening element 34 dampens the movement of the steady arm 28.

The dampening element 34 also dampens the propagation of secondary waves on the contact wire 16 when they come into contact with the clamp 30.

At the moment when the railway vehicle 12 is under the steady arm 28, the second end 42 of the steady arm 28 moves upwards due to the lift of a pantograph 22. Similar to the mechanism of elastic element 32 and of the dampening element 34 described above when the railway vehicle 12 approaches the steady arm 28, the elastic element 32 will deform into a new shape. New moment generated by the elastic element 32 will balance the moments on the steady arm 28. The dampening element 34 will dampen the movement of the steady arm 28.

After the railway vehicle 12 has moved away from the steady arm 28, the primary wave and the forwards-travelling secondary wave no longer have an influence on the steady arm 28. In contrast, the backwards-travelling secondary wave still displaces the second end 42 of the steady arm 28 via the clamp 30.

The dampening element 34 dampens this backwards-travelling secondary wave. The dissipation during the propagation of this backwards-travelling secondary wave on the contact wire 16 also dampens its propagation.

After the railway vehicle 12 has moved again into far field, the influence of the primary and secondary waves can be neglected again. In this way, the steady arm 28 resumes the default position. The elastic element 32 resumes its deformation under the default position of the steady arm 28. The dampening element 34 ceases to function.

This invention presents many advantages.

Thanks to the additional flexibility provided by the elastic element 32 to the system, the pressure that the steady arms apply on the contact wire is reduced and a more evenly distributed stress along the entire overhead contact wire is achieved. This decreases the localised wear on the contact wire, thus could extend the life span of contact wire.

The propagation of waves along the contact wire 16 is dampened, decreasing its wear, and ensure continuous power supply to railway vehicles.

Thanks to the above features, the reliability of the power supply installation is increased, and the maintenance cost is reduced.

Furthermore, the implementation of this invention is relatively easy and does not require complicated operations. The impact that the modification would bring to the system is minimal. In fact the steady arms existing on the current railway lines can be easily replaced with the ones described in present invention with little global impact on the infrastructure.

## Claims

1. A device (18) for holding a contact wire (16) intended to be in contact with at least one railway vehicle (12), said device (18) comprising:
- a support (24);
- a base (26) rotatably mounted on the support (24) around a first rotation axis (A'A) intended to be approximately vertical;
- a steady arm (28) having a first end (40) rotatably mounted on the base (26) around a second rotation axis (B'B), and a second end (42) opposite said first end (40), the second rotation axis (B'B) being approximately perpendicular to the first rotation axis (A'A), the steady arm (28) being moveable between a default position with respect to said base (26), occupied when the railway vehicle (12) is in a remote position with respect to the steady arm (28), and a plurality of deviated positions, in which the steady arm (28) deviates from the default position as the railway vehicle (12) is in closer positions with respect to the steady arm (28);
- a clamp (30) connected to the second end (42) of the steady arm (28), the clamp (30) being intended to be connected to the contact wire (16);
- an elastic element (32) set between the base (26) and the steady arm (28), said elastic element (32) being configured to be deformed when the steady arm (28) is in the default position and in some of the deviated positions; and
- a dampening element (34) configured to dampen movements of the steady arm (28),
whereby the dampening element (34) is configured to be compressed between the steady arm (28) and the base (26) in some of the deviated positions, **characterized in that** the dampening element (34) is a shock absorber comprising a cylinder, a piston and a stem mounted between the cylinder and the piston.

2. The device (18) according to claim 1, in which the elastic element (32) is located closer to the first end (40) than to the second end (42) of said steady arm (28).

3. The device (18) according to claim 1 or 2, in which the elastic element (32) is a spring (46).

4. The device (18) according to claim 3, in which the spring (46) is coiled around the second rotation axis (B'B).

5. The device (18) according to claim 3 or 4, in which the spring (46) has a first end (48a) exerting a force (F3) on a lower surface of the steady arm (28), and a second end (48b) exerting a force (F4) on a lower surface of the base (26).

6. The device (18) according to any of claims 1 to 5, in which the base (26) comprises at least a central portion (36) and two lateral portions (38) along the second rotation axis (B'B), the second rotation axis (B'B) extending through the lateral portions (38).

7. The device (18) according to any of claims 1 to 6, in which the dampening element (34) is located closer to the first end (40) than to the second end (42) of said steady arm (28).

8. The device (18) according to any of claims 1 to 7, in which the dampening element (34) is fixed to the steady arm (28).

9. The device (18) according to any of claims 1 to 8, in which the steady arm (28) has a bent shape, comprising at least a first portion (44a) in contact with the first end (40) of the steady arm (28) and a second portion (44b) in contact with the second end (42) of the steady arm (28), the second portion (44b) being at an angle with the first portion (44a).

10. A power supply installation (10) comprising:
- a support system (14) fixed to a ground;
- a device (18) according to any of claims 1 to 9, the device (18) being mechanically connected to the support system (14); and
- a contact wire (16) mechanically connected to the clamp (30).

11. A method for holding a contact wire (16) intended to be in contact with at least one railway vehicle (12), said method comprising the following steps:
- providing a device (18) according to any of claims 1 to 9, the first rotation axis (A'A) being approximately vertical;
- connecting the clamp (30) to the contact wire (16); and
- deforming the elastic element (32) when the steady arm (28) is in the default position and in some of the deviated positions;
whereby the method further comprises a step of dampening movements of the steady arm (28) using the dampening element (34).

## Patentansprüche

1. Vorrichtung (18) zum Halten einer Kontaktleitung (16), die dazu vorgesehen ist, um in Kontakt mit wenigstens einem Schienenfahrzeug (12) zu sein, wobei die Vorrichtung (18) aufweist:
- einen Halter (24),
- eine Basis (26), die an dem Halter (24) um eine erste Drehachse (A'A) herum drehbar montiert ist, die dazu vorgesehen ist, in etwa vertikal zu sein,
- einen festen Arm (28), der ein erstes Ende (40), das um eine zweite Drehachse (B'B) herum drehbar an der Basis (26) montiert ist, und ein zweites Ende (42) hat, das dem ersten Ende (40) entgegengesetzt ist, wobei die zweite Drehachse (B'B) in etwa senkrecht zu der ersten Drehachse (A'A) ist, wobei der feste Arm (28) bewegbar ist zwischen einer Standard-Position bezüglich der Basis (26), welche eingenommen ist, wenn das Schienenfahrzeug (12) in einer Entfernt-Position bezüglich des festen Arms (28) ist, und einer Mehrzahl von ausgelenkten Positionen, in welchen der feste Arm (28) von der Standard-Position aus ausgelenkt ist, wenn das Schienenfahrzeug (12) in näheren Positionen bezüglich des festen Arms (28) ist,
- eine Klammer (30), die mit dem zweiten Ende (42) des festen Arms (28) verbunden ist, wobei die Klammer (30) dazu vorgesehen ist, mit der Kontaktleitung (16) verbunden zu sein,
- ein Elastikelement (32), das zwischen die Basis (26) und den festen Arm (28) gesetzt ist, wobei das Elastikelement (32) konfiguriert ist, um deformiert zu sein, wenn der feste Arm (28) in der Standard-Position und in einigen der ausgelenkten Positionen ist, und
- ein Dämpfungselement (34), das konfiguriert ist, um Bewegungen des festen Arms (28) zu dämpfen,
wobei das Dämpfungselement (34) konfiguriert ist, um in einigen der ausgelenkten Positionen zwischen dem festem Arm (28) und der Basis (28) zusammengedrückt zu sein,
**dadurch gekennzeichnet, dass** das Dämpfungselement (34) ein Stoßabsorber ist, der einen Zylinder, einen Kolben und einen Schaft aufweist, der zwischen dem Zylinder und dem Kolben montiert ist.

2. Vorrichtung (18) gemäß Anspruch 1, wobei das Elastikelement (32) näher zu dem ersten Ende (40) angeordnet ist als das zweite Ende (42) des festen Arms (28).

3. Vorrichtung (18) gemäß Anspruch 1 oder 2, wobei das Elastikelement (32) eine Feder (46) ist.

4. Vorrichtung (18) gemäß Anspruch 3, wobei die Feder (46) um die zweite Drehachse (B'B) herum gewickelt ist.

5. Vorrichtung (18) gemäß Anspruch 3 oder 4, wobei die Feder (46) ein erstes Ende (48a), das eine Kraft (F3) auf eine untere Fläche des festen Arms (28) ausübt, und ein zweites Ende (48b) hat, das eine Kraft (F4) auf eine untere Fläche der Basis (26) ausübt.

6. Vorrichtung (18) gemäß irgendeinem der Ansprüche 1 bis 5, wobei die Basis (26) wenigstens einen zentralen Abschnitt (36) und zweite seitliche Abschnitte (38) entlang der zweiten Drehachse (B'B) aufweist, wobei die zweite Drehachse (B'B) sich durch die seitlichen Abschnitte (38) hindurch erstreckt.

7. Vorrichtung (18) gemäß irgendeinem der Ansprüche 1 bis 6, wobei das Dämpfungselement (34) näher zu dem ersten Ende (40) angeordnet ist als das zweite Ende (42) des festen Arms (28).

8. Vorrichtung (18) gemäß irgendeinem der Ansprüche 1 bis 7, wobei das Dämpfungselement (34) an dem festen Arm (28) fixiert ist.

9. Vorrichtung (18) gemäß irgendeinem der Ansprüche 1 bis 8, wobei der feste Arm (28) eine gebogene Form hat, aufweisend wenigstens einen ersten Abschnitt (44a) in Kontakt mit dem ersten Ende (40) des festen Arms (28) und einen zweiten Abschnitt (44b) in Kontakt mit dem zweiten Ende (42) des festen Arms (28), wobei der zweite Abschnitt (44b) in einem Winkel mit dem ersten Abschnitt (44a) ist.

10. Stromzufuhrinstallation (10), aufweisend:
- ein Haltesystem (14), das an einem Boden befestigt ist,
- eine Vorrichtung (18) gemäß irgendeinem der Ansprüche 1 bis 9, wobei die Vorrichtung (18) mit dem Haltesystem (14) mechanisch verbunden ist, und
- eine Kontaktleitung (16), die mit der Klammer (30) mechanisch verbunden ist.

11. Verfahren zum Halten einer Kontaktleitung (16), die dazu vorgesehen ist, um mit wenigstens einem Schienenfahrzeug (12) in Kontakt zu sein, wobei das Verfahren die folgenden Schritte aufweist:
- Bereitstellen einer Vorrichtung (18) gemäß irgendeinem der Ansprüche 1 bis 9, wobei die erste Drehachse (A'A) in etwa vertikal ist,
- Verbinden der Klammer (30) mit der Kontaktleitung (16), und
- Deformieren des Elastikelements (32), wenn der feste Arm (28) in der Standard-Position und in einigen der ausgelenkten Positionen ist,
wobei das Verfahren ferner aufweist einen Schritt des Dämpfens von Bewegungen des festen Arms (28) unter Verwenden des Dämpfungselements (34).

## Revendications

1. Dispositif (18) pour maintenir un fil de contact (16) destiné à être en contact avec au moins un véhicule ferroviaire (12), ledit dispositif (18) comprenant :
- un support (24) ;
- une base (26) montée de manière rotative sur le support (24) autour d'un premier axe de rotation (A'A) destiné à être approximativement vertical ;
- un bras de rappel (28) ayant une première extrémité (40) montée de manière rotative sur la base (26) autour d'un second axe de rotation (B'B), et une seconde extrémité (42) opposée à ladite première extrémité (40), le second axe de rotation (B'B) étant approximativement perpendiculaire au premier axe de rotation (A'A), le bras de rappel (28) étant mobile entre une position par défaut par rapport à ladite base (26), occupée lorsque le véhicule ferroviaire (12) est dans une position éloignée par rapport au bras de rappel (28), et une pluralité de positions déviées, dans lesquelles le bras de rappel (28) dévie de la position par défaut lorsque le véhicule ferroviaire (12) est dans des positions plus proches par rapport au bras de rappel (28) ;
- une bride de serrage (30) reliée à la seconde extrémité (42) du bras de rappel (28), la bride de serrage (30) étant destinée à être reliée au fil de contact (16) ;
- un élément élastique (32) placé entre la base (26) et le bras de rappel (28), ledit élément élastique (32) étant configuré pour être déformé lorsque le bras de rappel (28) est dans la position par défaut et dans certaines des positions déviées ; et
- un élément d'amortissement (34) conçu pour amortir les mouvements du bras de rappel (28),
dans lequel l'élément d'amortissement (34) est configuré pour être comprimé entre le bras de rappel (28) et la base (26) dans certaines des positions déviées,
**caractérisé en ce que** l'élément d'amortissement (34) est un amortisseur de choc comprenant un vérin, un piston et une tige montée entre le vérin et le piston.

2. Dispositif (18) selon la revendication 1, dans lequel l'élément élastique (32) est situé plus près de la première extrémité (40) que de la seconde extrémité (42) dudit bras de rappel (28).

3. Dispositif (18) selon la revendication 1 ou 2, dans lequel l'élément élastique (32) est un ressort (46).

4. Dispositif (18) selon la revendication 3, dans lequel le ressort (46) est enroulé autour du second axe de rotation (B'B).

5. Dispositif (18) selon la revendication 3 ou 4, dans lequel le ressort (46) a une première extrémité (48a) exerçant une force (F3) sur une surface inférieure du bras de rappel (28), et une seconde extrémité (48b) exerçant une force (F4) sur une surface inférieure de la base (26).

6. Dispositif (18) selon l'une quelconque des revendications 1 à 5, dans lequel la base (26) comprend au moins une partie centrale (36) et deux parties latérales (38) le long du second axe de rotation (B'B), le second axe de rotation (B'B) s'étendant à travers les parties latérales (38).

7. Dispositif (18) selon l'une quelconque des revendications 1 à 6, dans lequel l'élément d'amortissement (34) est situé plus près de la première extrémité (40) que de la seconde extrémité (42) dudit bras de rappel (28).

8. Dispositif (18) selon l'une quelconque des revendications 1 à 7, dans lequel l'élément d'amortissement (34) est fixé au bras de rappel (28).

9. Dispositif (18) selon l'une quelconque des revendications 1 à 8, dans lequel le bras de rappel (28) a une forme recourbée, comprenant au moins une première partie (44a) en contact avec la première extrémité (40) du bras de rappel (28) et une seconde partie (44b) en contact avec la seconde extrémité (42) du bras de rappel (28), la seconde partie (44b) formant un angle avec la première partie (44a).

10. Installation d'alimentation électrique (10) comprenant :
- un système de support (14) fixé sur un sol ;
- un dispositif (18) selon l'une quelconque des revendications 1 à 9, le dispositif (18) étant relié mécaniquement au système de support (14) ; et
- un fil de contact (16) relié mécaniquement à la bride de serrage (30).

11. Procédé pour maintenir un fil de contact (16) destiné à être en contact avec au moins un véhicule ferroviaire (12), ledit procédé comprenant les étapes suivantes :
- fourniture d'un dispositif (18) selon l'une quelconque des revendications 1 à 9, le premier axe de rotation (A'A) étant approximativement vertical ;
- liaison de la bride de serrage (30) au fil de contact (16) ; et
- déformation de l'élément élastique (32) lorsque le bras de rappel (28) est dans la position par défaut et dans certaines des positions déviées ;
dans lequel le procédé comprend en outre une étape d'amortissement de mouvements du bras de rappel (28) au moyen de l'élément d'amortissement (34).
